Europäisches Patentamt

European Patent Office

Office européen des brevets

(19)

(11) Numéro de publication: **0 245 200 B1**

(12) **FASCICULE DE BREVET EUROPEEN**

(45) Date de publication de fascicule du brevet: **01.07.92**

(51) Int. Cl.5: **G01K 1/20**, G05D 23/24, G01N 27/04, G12B 7/00, G01R 27/14

(21) Numéro de dépôt: **87810203.7**

(22) Date de dépôt: **03.04.87**

(54) **Procédé pour stabiliser la température d'au moins un tronçon de solide de forme allongée et dispositif pour la mise en oeuvre de ce procédé.**

(30) Priorité: **04.04.86 CH 1317/86**

(43) Date de publication de la demande:
**11.11.87 Bulletin 87/46**

(45) Mention de la délivrance du brevet:
**01.07.92 Bulletin 92/27**

(84) Etats contractants désignés:
**AT BE CH DE ES FR GB GR IT LI LU NL SE**

(56) Documents cités:
**EP-A- 0 168 346**
**DE-A- 3 237 796**
**GB-A- 1 512 289**
**GB-A- 2 121 181**

**PATENT ABSTRACTS OF JAPAN, vol. 6, no. 104 (P-122)[982], 15 juin 1982; & JP-A-57 36 321**

(73) Titulaire: **Lavanchy, Gérard André**
**12, av. de la Rochelle**
**CH-1008 Prilly(CH)**

(72) Inventeur: **Lavanchy, Gérard André**
**12, av. de la Rochelle**
**CH-1008 Prilly(CH)**

(74) Mandataire: **Nithardt, Roland**
**Cabinet Roland Nithardt Conseils en Propriété Industrielle S.A. Y-Parc Scientifique et Technologique Chemin de la Sallaz Case postale 3347**
**CH-1400 Yverdon-les-Bains(CH)**

## Description

La présente invention concerne un procédé pour stabiliser à une valeur quasi constante et uniforme la température d'au moins un tronçon d'un solide de forme allongée, tel qu'un câble, un fil, une barre ou un profilé, au cours d'un processus de mesure de résistance électrique ou de résistivité, dans lequel on asservit la température d'organes voisins du tronçon, ou en contact avec celui-ci et qui en constituent l'environnement immédiat, à la température mesurée en un point prédéterminé de la surface dudit tronçon de manière à supprimer au maximun tout échange thermique entre ledit tronçon et l'ambiance extérieure.

Cette invention concerne également un dispositif pour stabiliser à une valeur quasi constante et uniforme, la température d'au moins un tronçon d'un solide de forme allongée tel qu'un câble, un fil, une barre ou un profilé, au cours d'un processus de mesure de résistance électrique ou de résistivité, pour la mise en oeuvre du procédé selon la revendication 1, ce dispositif comportant des moyens pour asservir la température d'organes voisins du tronçon ou en contact avec celui-ci et qui en constituent l'environnement immédiat à la température mesurée en un point prédéterminé de la surface dudit tronçon de manière à supprimer au maximum tout échange thermique entre ledit tronçon et l'ambiance extérieure.

Alors que la mesure de la température d'un liquide ne présente pas de difficulté particulière étant donné qu'un capteur peut être immergé dans ce liquide, la mesure de la température d'un solide au moyen d'un capteur peut devenir aléatoire si le contact thermique entre le capteur et la surface dudit solide est précaire pour des raisons de géométrie. La qualité de la mesure est ainsi limitée par l'effet parasite du couplage thermique au milieu ambiant, une partie de la chaleur transmise au capteur s'écoulant par conduction de son dispositif de fixation, par rayonnement de la surface non en contact avec le solide ou par convexion via l'air ambiant. Il s'ensuit que la température présente un gradient et une discontinuité entre le solide et le capteur. L'erreur faite sur la mesure est approximativement proportionnelle à l'écart de température existant entre le solide et le milieu ambiant.

Une autre conséquence de cette différence de température est une décroissance approximativement exponentielle de celle-ci au cours du temps. Un solide échauffé, abandonné dans une ambiance plus froide se refroidit par sa surface et par ses parties en contact éventuel avec d'autres parties plus froides. Ce phénomène est de plus la cause d'un gradient thermique au sein même du solide.

Dans le cas particulier où l'on désire mesurer une constante physique dont la valeur varie avec la température, telle que par exemple la résistivité d'un métal ou la résistance linéïque d'un conducteur, il est nécessaire que l'échantillon en mesure se trouve à une température homogène et connue.

En laboratoire on peut, dans certains cas, plonger l'échantillon dans un bain liquide dont la température connue deviendra celle de l'échantillon. La correction de la mesure de résistance sera ainsi possible pour une température de référence autre que celle du bain, cette correction pouvant même être réalisée automatiquement par le circuit de mesure de la résistance si celui-ci est conçu pour prendre en compte de manière adéquate l'information issue d'un capteur et se présentant sous la forme d'un signal électrique. En milieu industriel, sur une machine de production, la mesure de la résistance linéïque d'un conducteur isolé monté à l'intérieur d'un câble transporteur d'énergie assemblé et compacté présente certaines difficultés du fait que le conducteur a été échauffé par déformation mécanique.

Le procédé et le dispositif de mesure de la résistance d'un tronçon de conducteur décrits dans le brevet suisse CH-A-628 992 du même demandeur sont basés sur le principe de l'asservissement en température de l'enceinte et/ou de l'air circulant dans cette enceinte et entourant le tronçon de conducteur. On a constaté que cet asservissement était insuffisant et n'aboutissait pas à des mesures absolument précises et fiables.

La demande européenne EP-A-0 168 346 décrit un procédé et un appareil pour la mesure de la résistance électrique d'un conducteur dont un tronçon est électriquement connecté à un pont de mesure par un système de pinces perforant la gaine. La résistance électrique du conducteur est déterminée par unité de longueur et affichée en fonction de la température.

La demande de brevet allemand DE-A-3 237 796 décrit un procédé et un dispositif de mesure de la température superficielle de fibres, rubans ou câbles se déplaçant axialement à vitesse élevee, dans lesquels on utilise un capteur de mesure couplé à des amplificateurs d'asservissement.

Dans un dispositif tel que décrit par le brevet suisse Nᵒ 542 447, les pinces de maintien du câble en position qui servent également au retour du courant, font effet de radiateurs et dissipent une partie de la chaleur contenue dans le conducteur, ce qui a pour conséquence de créer un gradient longitudinal de la température qui reste sensiblement plus élevé dans la zone entourant le milieu du tronçon en mesure.

La présente invention se propose de pallier les différents inconvénients mentionnés ci-dessus et permet d'aboutir à une mesure précise grâce au fait que la température du tronçon en mesure est connue et stabilisée.

Ce but est atteint par le procédé selon l'invention, caractérisé en ce que l'on mesure indépendamment la température d'organes adjacents au tronçon dudit solide , au moyen de capteurs de température, en ce que l'on transmet les signaux issus de ces capteurs à des amplificateurs d'asservissement correspondant respectivement auxdits capteurs, en ce que lesdits amplificateurs d'asservissement utilisent comme signal de consigne commun le signal issu d'un capteur mesurant la température à la surface dudit tronçon, et en ce que chacun desdits amplificateurs commande un moyen de chauffage et/ou de refroidissement capable d'amener et de maintenir l'organe correspondant à la température de consigne mesurée à la surface dudit tronçon.

Le dispositif selon l'invention est caractérisé en ce qu'il comporte des moyens pour mesurer indépendamment la température d'organes adjacents au tronçon dudit solide, au moyen de capteurs de température, des moyens pour transmettre les signaux issus de ces capteurs à des amplificateurs d'asservissement correspondant respectivement auxdits capteurs, ces amplificateurs etant agencés pour utiliser comme signal de consigne commun le signal issu d'un capteur mesurant la température à la surface dudit tronçon et chacun des amplificateurs étant en outre agencé pour commander un moyen de chauffage et/ou de refroidissement capable d'amener et de maintenir l'organe correspondant à la température de consigne mesurée à la surface dudit tronçon.

La présente invention sera mieux comprise en référence à la description d'un exemple de réalisation et du dessin annexé dans lequel :

La fig. 1 représente une vue schématique d'une forme de réalisation préférée du dispositif selon l'invention,

la fig. 2 représente une vue en coupe transversale des deux coquilles formant la gaine de protection thermique.

En référence aux figures, le dispositif de mesure représenté est conçu pour permettre par exemple la mesure de la résistance électrique ou de la résistivité d'un conducteur ou d'un câble isolé destiné au transport d'énergie électrique. Ce dispositif est équipé d'une gaine de protection thermique 2 comprenant une coquille supérieure 3 et une coquille inférieure 4 de préférence articulées l'une par rapport à l'autre et ménageant entre elles un canal longitudinal à l'intérieur duquel est logé le tronçon de câble 1 en mesure. Deux paires de pinces 5 et 6 sont disposées de part et d'autre de la gaine de protection thermique 2, ces pinces ayant pour fonction de maintenir le câble et, le cas échéant d'assurer le contact électrique avec lui.

Un premier capteur de température 7 est monté en contact avec la surface périphérique du tronçon de câble en mesure et est connecté à une entrée d'un amplificateur différentiel, appelé amplificateur d'asservissement 8, auquel il transmet une information correspondant à la température de référence qui est celle mesurée à la surface du tronçon de câble. Un deuxième capteur de température 9 est associé à la gaine de protection thermique 2, par exemple à la coquille inférieure 4 de cette gaine. Ce capteur est connecté à une autre entrée de l'amplificateur d'asservissement 8. Un dispositif de régulation de la température 10, à savoir de chauffage et/ou de refroidissement est associé à la gaine de protection thermique 2. La différence entre les températures mesurées par les deux capteurs 7 et 9 permet à l'amplificateur d'asservissement 8 de fournir un signal de commande au dispositif de régulation de la température 10. De cette manière, le dispositif asservit la température de la coquille inférieure 4 disposée sous le tronçon de câble en mesure, à la température mesurée à la surface de ce tronçon. Cet asservissement est avantageusement de type connu proportionnel-intégrateur-différentiel.

De façon similaire, le dispositif comporte un troisième capteur de température 11 associé à la coquille supérieure 3 de la gaine de protection thermique. Ce capteur est connecté à une entrée d'un deuxième amplificateur différentiel 12 dont l'autre entrée est raccordée au capteur de température 7 en contact avec la surface périphérique du tronçon de câble en mesure. Le signal de sortie de ce deuxième amplificateur d'asservissement 12 commande un dispositif de régulation de la température 13 qui est associé à la coquille supérieure 3 de ladite gaine.

Cette forme de réalisation est certainement la plus avantageuse, bien que l'on pourrait, dans une version simplifiée, remplacer les deux capteurs de température 9 et 11 par un capteur unique, les amplificateurs d'asservissement 8 et 12 par un amplificateur unique et les dispositifs de régulation de la température 10 et 13 par un dispositif unique associé aux deux coquilles 3 et 4 de la gaine de protection thermique 2.

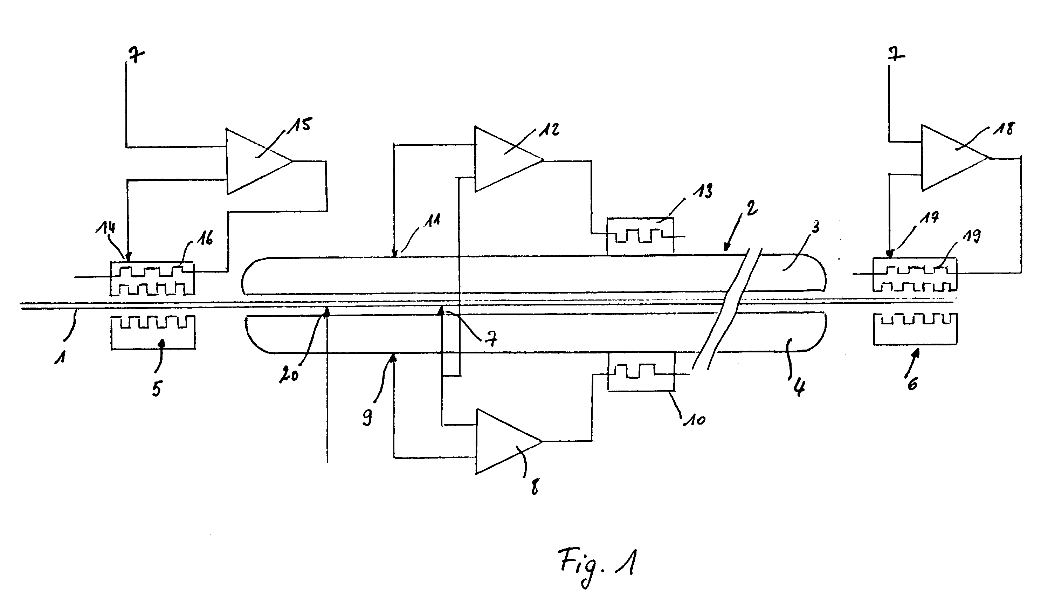

Dans l'exemple de réalisation illustré par la figure 1, les paires de pinces de contact 5 et 6, destinées au retour du courant de mesure de la résistance du câble 1, sont également asservies en température. A cet effet, les pinces 5 comportent un capteur de température 14 connecté à une entrée d'un amplificateur d'asservissement 15 dont l'autre entrée est connectée au capteur de température 7 défini précédemment et dont la sortie est utilisée pour commander un dispositif de régulation de la température 16 associé aux pinces 5.

De façon similaire, les pinces 6 sont équipées d'un capteur de température 17 connecté à une entrée d'un amplificateur d'asservissement 18 dont l'autre entrée est connectée au capteur de température 7 et dont la sortie est associée à un dispositif de régulation de la température 19 des pinces 6.

On constate que le signal de référence correspondant à la température mesurée à la surface du tronçon de câble 1 dans la zone de mesure, et fourni par le capteur de température 7, est utilisé pour effectuer toutes les corrections de température des différents organes qui constituent l'environnement immédiat ou qui sont en contact avec ce tronçon. Cette même température de référence peut également être utilisée pour effectuer la correction de la mesure de résistance. Toutefois, un deuxième capteur de température 20 en contact direct avec la surface périphérique du tronçon de câble en mesure peut être utilisé indépendamment du premier capteur 7 pour fournir l'information de température à un circuit de mesure de la résistance (non représenté), connu en soit et par exemple décrit dans le brevet américain no. 3'863'148.

Le même procédé de compensation du flux de chaleur peut également être appliqué aux supports mécaniques des différents capteurs.

Comme mentionné précédemment le but recherché est de maintenir constante la température de tous les éléments qui entrent en contact ou qui forment l'environnement immédiat du tronçon de solide allongé soumis au processus de mesure, à une valeur aussi proche que possible de celle de ce tronçon. La conséquence en est une précision accrue de la mesure effectuée sur ce tronçon. Il est bien évident qu'un asservissement ne peut pas être absolument parfait. La valeur réglée s'écarte toujours quelque peu de la valeur de consigne. Si l'écart est positif, la température du système présente une lente dérive de même signe, l'environnement transmettant un peu de chaleur au solide en mesure. Selon une forme de réalisation préférée, on règle les amplificateurs de telle manière que la température de consigne soit décalée, et quelque peu inférieure à la température mesurée à la surface du solide. La dérive thermique est alors légèrement négative, le système prenant à long terme, et cela de manière approximativement exponentielle, une température sensiblement égale à celle de l'environnement extérieur.

Les capteurs de température, ainsi que les amplificateurs d'asservissement sont du type conventionnel couramment proposé sur le marché des composants électroniques.

Le dispositif décrit ci-dessus à titre d'exemple peut être adapté à différents cas particuliers. Par exemple, lorsque le solide ne peut pas être à une température uniforme, le capteur de température en contact avec sa surface périphérique pourra être remplacé par plusieurs capteurs fournissant plusieurs informations dont on prendra la moyenne comme signal de référence de base.

Par ailleurs, lorsque la température du solide est à une température inférieure à celle de l'environnement immédiat, les moyens de chauffage peuvent être remplacés par des moyens de réfrigération. Une variante de réalisation du dispositif prévoit l'utilisation d'éléments Peltier qui ont l'avantage de permettre aussi bien le réchauffement que le refroidissement.

Dans le but de permettre d'effectuer les mesures plus rapidement, le système de confinement peut être préchauffé ou prérefroidi à une température déterminée empiriquement comme devant être relativement proche de celle qu'aura le solide lorsqu'on le soumet au processus de mesure. Cette valeur peut être mémorisée suite à une précédente mesure si l'on prévoit qu'un nouvel échantillon aura au moins approximativement la même température que le précédent.

Cette dernière variante est avantageusement mise en oeuvre dans le cas particulier où le dispositif est appliqué à la mesure de température d'un conducteur issu d'une machine d'assemblage dont on veut mesurer la résistance linéique corrigée de l'effet de la température. Dans ce cas, le circuit de mesure de la résistance linéique comprendra les éléments nécessaires pour permettre une compensation automatique de cette mesure en fonction de la température effectivement mesurée.

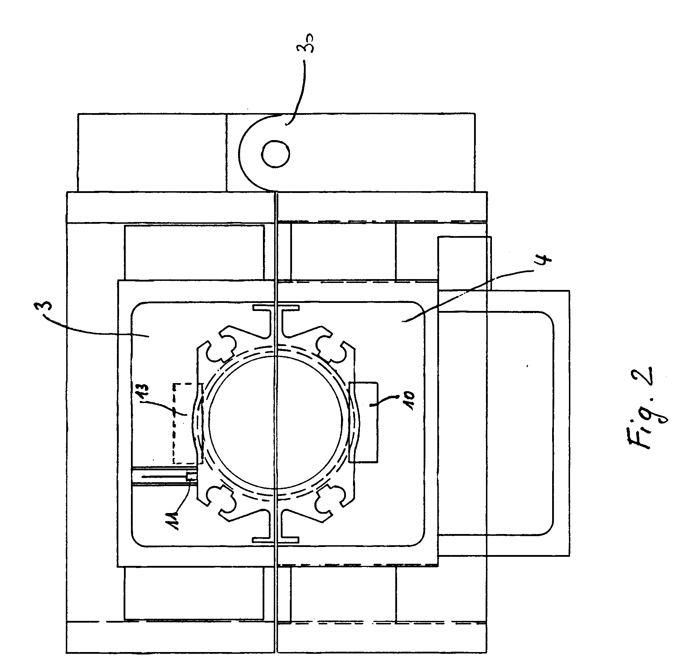

En référence à la figure 2, la gaine de protection thermique 2 se compose avantageusement de deux coquilles 3 et 4 constituées par des profilés en aluminium et couplées au moyen de charnières 30. Ces profilés sont étudiés pour définir un canal central dans lequel on peut loger le tronçon de câble en mesure et pour fixer tous les supports de capteurs et de dispositifs de régulation de la température utilisés pendant le processus de mesure.

La forme de réalisation décrite et illustrée est donnée à titre d'exemple. Il est bien évident que toutes autres formes de profilés remplissant les mêmes fonctions pourraient être utilisées dans le cadre de l'invention.

**Revendications**

1.   Procédé pour stabiliser à une valeur quasi constante et uniforme la température d'au moins un tronçon d'un solide (1) de forme allongée, tel qu'un câble, un fil, une barre ou un profilé, au cours d'un processus de mesure de résistance électrique ou de résistivité, dans lequel on asservit la température d'organes voisins du tronçon (1), ou en contact avec celui-ci et qui en constituent l'environnement immédiat, à la température mesurée en un point prédéterminé de la surface dudit tronçon (1) de manière à supprimer au maximum tout échange thermique entre ledit tronçon (1) et l'ambiance extérieure, caractérisé en ce que l'on mesure indépendamment la température d'organes adjacents (2, 5, 6) au tronçon dudit solide (1), au moyen de capteurs de température (7, 9, 11, 14, 17), en ce que l'on transmet les signaux issus de ces capteurs (7, 9, 11, 14, 17) à des amplificateurs d'asservissement (8, 12, 15, 18) correspondant respectivement auxdits capteurs (7, 9, 11, 14, 17), en ce que lesdits amplificateurs d'asservissement (8, 12, 15, 18) utilisent comme signal de consigne commun le signal issu d'un capteur mesurant la température à la surface dudit tronçon (1), et en ce que chacun desdits amplificateurs (8, 12, 15, 18) commande un moyen de chauffage et/ou de refroidissement capable d'amener et de maintenir l'organe correspondant à la température de consigne mesurée à la surface dudit tronçon (1).

2. Dispositif pour stabiliser à une valeur quasi constante et uniforme, la température d'au moins un tronçon d'un solide (1) de forme allongée tel qu'un câble, un fil, une barre ou un profilé, au cours d'un processus de mesure de résistance électrique ou de résistivité, ce dispositif comportant des moyens pour asservir la température d'organes voisins du tronçon (1) ou en contact avec celui-ci et qui en constituent l'environnement immédiat à la température mesurée en un point prédéterminé de la surface dudit tronçon (1) de manière à supprimer au maximum tout échange thermique entre ledit tronçon (1) et l'ambiance extérieure, caractérisé en ce qu'il comporte des moyens pour mesurer indépendamment la température d'organes (2, 5, 6) adjacents au tronçon dudit solide, au moyen de capteurs de température (7, 9, 11, 14, 17), des moyens pour transmettre les signaux issus de ces capteurs à des amplificateurs d'asservissement (8, 12, 15, 18) correspondant respectivement auxdits capteurs (7, 9, 11, 14, 17), ces amplificateurs (8, 12, 15, 18) étant agencés pour utiliser comme signal de consigne commun le signal issu d'un capteur mesurant la température à la surface dudit tronçon (1) et chacun de ces amplificateurs étant en outre agencé pour commander un moyen de chauffage et/ou de refroidissement capable d'amener et de maintenir l'organe correspondant à la température de consigne mesurée à la surface dudit tronçon (1).

**Claims**

1. A process for stabilising the temperature of at least one section of a solid (1) having an elongate shape, such as a cable, a wire, a bar or a section, at a quasi constant and uniform value, during a process for measuring the electric resistance or resistivity, in which the temperature of adjacent members of the section (1) or in contact therewith and which constitute its immediate environment is brought under control, at the temperature measured at a predetermined point of the surface of said section (1) so as to suppress as far as possible any heat transfer between said section (1) and the exterior environment,

**characterised in that** the temperature of members adjacent (2, 5, 6) to the section of said solid (1) are measured independently, by means of temperature sensors (7, 9, 11, 14, 17),

**in that** the signals produced by said sensors (7, 9, 11, 14, 17) are transmitted to servo-controlled amplifiers (8, 12, 15, 18) corresponding respectively to said sensors (7, 9, 11, 14, 17),

**in that** said servo-controlled amplifiers (8, 12, 15, 18) use the signal produced by a sensor measuring the temperature on the surface of said section (1) as the common command signal,

**and in that** each of said amplifiers (8, 12, 15, 18) controls a heating and/or cooling means capable of bringing the corresponding member to the command temperature measured at the surface of said section (1) and keeping it there.

2. A device for stabilising the temperature of at least one section of a solid (1) having an elongate shape such as a cable, a wire, a bar or a section, at a quasi constant and uniform value, during a process for measuring the electric resistance or resistivity, with this device comprising means for bringing under control the temperature of adjacent members of the section (1) or in contact therewith and which constitute its immediate environment at the temperature measured at a predetermined point of the surface of said section (1) so a to suppress as far as possible any heat transfer between said section (1) and the exterior environment,

**characterised in that** it comprises means for measuring independently the temperature of members adjacent to the section of said solid, by means of temperature sensors (7, 9, 11, 14, 17), means for transmitting the signals produced by these sensors to servo-controlled amplifiers (8, 12, 15, 18) corresponding respectively to said sensors (7, 9, 11, 14, 17), with these amplifiers (8, 12, 15, 18) being designed to use the signal produced by a sensor measuring the temperature at the surface of said section (1) as the common command signal and each of these amplifiers also being designed to control a heating and/or cooling means capable of bringing the corresponding member to the command temperature measured at the surface of said section (1) and keeping it there.

**Patentansprüche**

1.  Verfahren zum Stabilisieren der Temperatur von mindestens einem festen Teilstück (1) länglicher Form, wie etwa ein Kabel, ein Draht, ein Stab oder ein Profil, auf einen nahezu konstanten und gleichförmigen Wert, während eines Verfahrens zum Messen des elektrischen Widerstandes oder des Leitungswiderstandes, bei welchem man die Temperatur der Elemente, die sich in der Nachbarschaft des Teilstückes (1) oder in Kontakt mit diesem befinden und die dessen unmittelbare Umgebung darstellen, auf die an einem vorbestimmten Punkt der Oberfläche des Teilstückes (1) gemessene Temperatur einregelt, so daß man eine maximale Unterdrückung jeglichen Wärmeaustausches zwischen dem Teilstück (1) und der äußeren Umgebung erreicht, **dadurch gekennzeichnet,** daß man mittels Temperaturfühlern (7,9,11,14,17) unabhängig die Temperatur der an das Teilstück des festen Körpers (1) angrenzenden Elemente (2,5,6) mißt, daß man die von diesen Fühlern (7,9,11,14,17) abgegebenen Signale in Rechenverstärker (8,12,15,18) eingibt, die jeweils mit den Fühlern (7,9,11,14,17) korrespondieren, daß diese Rechenverstärker (8,12,15,18) als gemeinsamen Einstellwert das Signal verwenden, das ein, die Temperatur an der Oberfläche des Teilstückes (1) messender Fühler abgibt, und daß jeder dieser Verstärker (8,12,15,18) eine Einrichtung zum Erwärmen und/oder zum Kühlen steuert, die in der Lage ist, das entsprechende Element auf die an der Oberfläche des Teilstückes (1) gemessene Einstelltemperatur zu bringen und sie zu halten.

2.  Vorrichtung zum Stabilisieren der Temperatur von mindestens einem festen Teilstück (1) länglicher Form, wie etwa ein Kabel, ein Draht, ein Stab oder ein Profil auf einen gewissermaßen konstanten und gleichförmigen Wert, während eines Verfahrens zum Messen des elektrischen Widerstandes oder des Leitungswiderstandes, wobei diese Vorrichtung Einrichtungen aufweist, um die Temperatur der Elemente, die sich in der Nachbarschaft des Teilstückes (1) oder in Kontakt mit diesem befinden und die dessen unmittelbare Umgebung darstellen, auf die an einem vorbestimmten Punkt der Oberfläche des Teilstückes (1) gemessene Temperatur einzuregeln, so daß man eine maximale Unterdrückung jeglichen Wärmeaustausches zwischen dem Teilstück (1) und der äußeren Umgebung erreicht, **dadurch gekennzeichnet,** daß sie Einrichtungen aufweist, um mittels Temperaturfühlern (7,9,11,14,17) unabhängig die Temperatur der an das Teilstück des festen Körpers angrenzenden Elemente (2,5,6) zu messen, Einrichtungen um die von diesen Fühlern abgegebenen Signale in Rechenverstärker (8,12,15,18) einzugeben, die jeweils mit den Fühlern (7,9,11,14,17) korrespondieren, wobei diese Verstärker (8,12,15,18) so eingerichtet sind, daß sie als gemeinsamen Einstellwert das Signal verwenden, das ein die Temperatur an der Oberfläche des Teilstückes (1) messender Fühler abgibt und daß jeder dieser Verstärker außerdem dazu dient, eine Einrichtung zum Erwärmen und/oder zum Kühlen zu steuern, die in der Lage ist, das entsprechende Element auf die an der Oberfläche des Teilstückes (1) gemessene Einstelltemperatur zu bringen und sie zu halten.

Fig. 1

Fig. 2